(19) Europäisches Patentamt
European Patent Office
Office européen des brevets

(11) EP 1 881 927 B1

(12) EUROPEAN PATENT SPECIFICATION

(45) Date of publication and mention
of the grant of the patent:
**17.07.2013 Bulletin 2013/29**

(51) Int Cl.:
***B63B 21/50*** *(2006.01)*     ***F03D 11/04*** *(2006.01)*

(21) Application number: **06747631.7**

(22) Date of filing: **04.05.2006**

(86) International application number:
**PCT/NO2006/000164**

(87) International publication number:
**WO 2006/121337 (16.11.2006 Gazette 2006/46)**

(54) **ANCHORING ARRANGEMENT FOR FLOATING WIND TURBINE INSTALLATIONS**

VERANKERUNGSANORDNUNG FÜR SCHWIMMENDE WINDTURBINENANLAGEN

STRUCTURE D ANCRAGE POUR INSTALLATION A TURBINE EOLIENNE FLOTTANTE

(84) Designated Contracting States:
**AT BE BG CH CY CZ DE DK EE ES FI FR GB GR HU IE IS IT LI LT LU LV MC NL PL PT RO SE SI SK TR**

(30) Priority: **06.05.2005 NO 20052261**

(43) Date of publication of application:
**30.01.2008 Bulletin 2008/05**

(73) Proprietor: **Hywind AS**
**4035 Stavanger (NO)**

(72) Inventor: **SVEEN, Dagfinn**
**0587 Oslo (NO)**

(74) Representative: **Jackson, Robert Patrick et al**
**Dehns**
**St Bride's House**
**10 Salisbury Square**
**London**
**EC4Y 8JD (GB)**

(56) References cited:
WO-A1-98/09051          WO-A1-2004/104411
DE-A1- 10 056 857       FR-A1- 2 278 562
US-A- 3 082 608         US-A- 3 572 043
US-A- 5 476 059

## Description

The present invention relates to an anchoring arrangement for a floating wind turbine installation, such wind turbine installation comprising a floating cell, a tower arranged over the floating cell, a generator mounted on the tower which is rotatable in relation to wind direction and fitted with a wind rotor, and an anchor line arrangement connected to anchors on the sea bed.

The advantage of using floating wind turbines is that this allows almost unlimited access to installation areas, since relatively deep sea areas can be used.

Normally, wind turbines are arranged such that the rotor faces the wind with the tower positioned downstream of the wind direction. This is to avoid the wind flow being disturbed before it passes through the rotor, which could otherwise lead to loss of energy and disruptive vibrations and impulses in the turbine.

To control this, active direction correction of the turbine around the tower's vertical axis is required as the wind changes direction. This is normally achieved by arranging a rotating bearing rim with a ring and pinion solution between the top of the tower and the nacelle.

Yawing is performed by a system which registers the wind direction and automatically drives the pinion by a motor to make the rotor turn into the direction of the wind.

This works well when the tower is on a fixed foundation, as in land installations and offshore installations in shallow waters.

When the tower is mounted on a floating support, it is necessary to ensure sufficient resistance to rotation round the vertical axis, so that active rotation of the nacelle is performed rather than the whole plant rotating too far when the wind turbine is subjected to oblique wind loads.

Resistance to rotation is provided by anchor lines which are pre-tensioned by a specific force. When anchor lines are fixed directly to a slim cylindrical construction, then, as described below, this gives low resistance to rotation as the anchor line is connected near the rotation axis. Resistance to rotation occurs when the tower is rotated from its equilibrium position and a righting arm occurs as a function of angle (a) and radius (r) from the rotation axis to the line fixing point. The righting arm (a) is in this case:

$$a = \sin(a) \times r$$

The righting force corresponds to the normal component $F_n$ on the rotation axis of the pre-tension on the line, and the righting moment will then become:

$$M_r = F_n \times a = F_n \times \sin(a) \times r$$

The resistance moment against rotation is thus, as shown above, a sine function with a maximum at 90° (see below). At small angles of rotation the rotation resistance will act like a linear rotation spring.

From US Patent No. 3 082 608 an anchored platform of triangular design has previously been disclosed. From each corner, preferably at a 20° angle, two chains or cables are extended which are joined to heavy weights arranged on the sea bed, while from each weight further anchoring lines extend to heavy anchors sited further away from the platform. The purpose of this solution is primarily an anchoring solution designed to eliminate platform motion caused by waves. The solution will provide resistance to rotation but will be unsuitable for anchoring a slim cylindrical floating wind turbine, because it presupposes that there is a great distance between the three fixing points for the anchors lines. The known solution is based on a taut anchoring system, generating very large dynamic forces in the anchor lines. In addition the anchoring solution is heavy and complex, which in turn necessitates high costs of manufacture and installation.

US 5,476,059 discloses a torque enhancer for an offshore system wherein a turret is anchored by catenary chain devices to help minimise rotation of the turret when the vessel weathervanes.

WO 2004/104411 discloses an arrangement for anchoring a floating structure comprising a mooring boom pivotally arranged at either end, wherein each mooring boom at its free end has a bushing through which anchor chains or wires can run. The anchor chain that runs through one of the bushings is fastened to the opposite end of the structure.

The present invention provides a solution for anchoring a floating wind turbine installation by which it is possible to increase significantly the initial resistance to rotation round the vertical axis. It further provides a solution which is extremely simple and can be used for anchoring wind turbine installation in very deep water.

The present invention provides a floating wind turbine installation according to claim 1.

The dependent claims 2 - 8 define advantageous features of the invention.

The invention will be further described by means of an example and with reference to the attached figures in which:

Fig. 1 shows a perspective sketch of a floating wind turbine with an anchoring arrangement according to the present invention,
Fig. 2 shows a skeleton sketch of the anchoring arrangement in relation to the invention shown in Fig. 1 and

Fig. 3 shows a diagram in which rotation resistance (rotation moment) is calculated on the basis of the rotation angle for a conventional anchor system compared with the present invention.

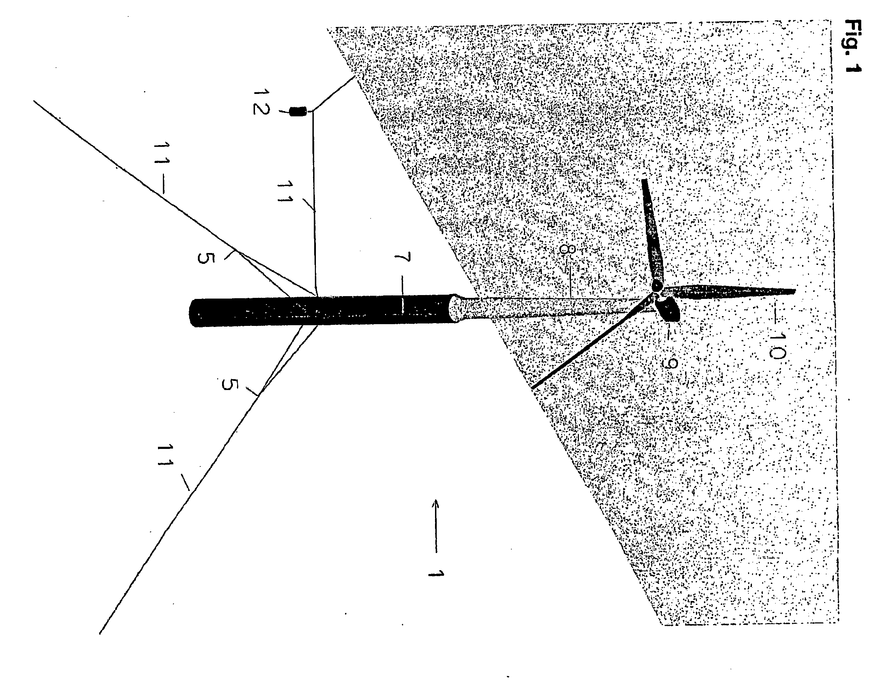

As mentioned, Fig. 1 shows a perspective sketch of a floating wind turbine installation 1 with an anchoring arrangement 6 according to the invention. The wind turbine includes, apart from anchoring lines 11 , a preferably circular elongated floating cell 7, a tower 8 mounted on the floating cell 7, and on top of the tower a generator 9 which can be rotated in relation to wind direction, bearing a wind rotor 10. The elongated shape has been selected from a desire to achieve low displacement with good stability and thus minimal effect from wind and waves. Weights 12 can further advantageously be arranged on the anchor lines to create the necessary tension in these.

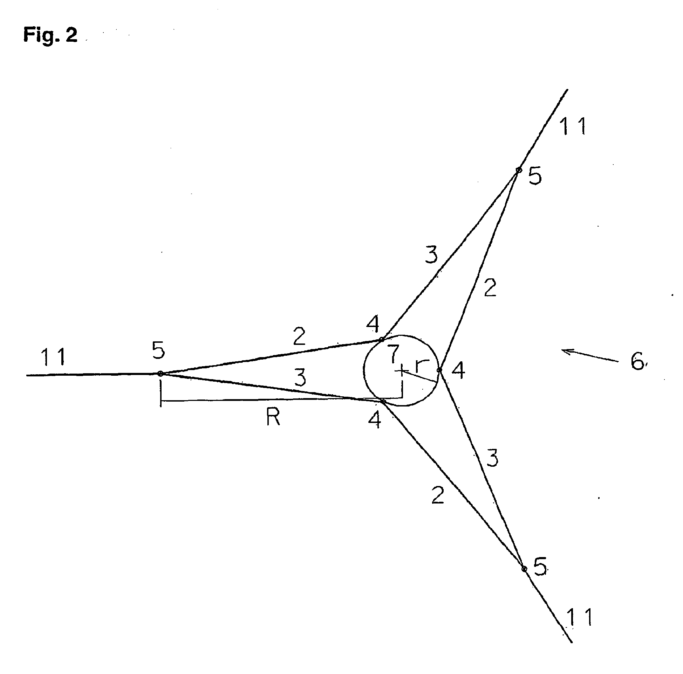

As is further evident from the anchor line arrangement 6 shown in Fig. 2, three anchor lines 11 have been used at intervals of 120°. The individual anchor lines 11 are each fixed at one end to anchors or anchoring points on the sea bed (not shown), and at the other end, at a certain distance from the floating cell 7 at a fixing point 5, they are connected to two lines 2 and 3 which slant outwards and are fixed to floating cell 7 at paired jointly arranged brackets. 4. Each of the anchor lines 11 forms with these a delta-shaped pattern or Y-shaped bifurcation at/towards the fixing point on floating cell 7. In this context it must be noted that even though the example uses one line 2 and one line 3, each extended at the same angle towards their respective fixing brackets 4 on the floating cell, two or more lines 2 and two or more lines 3 may be used, each extending at different angles towards various fixing brackets on the floating cell.

The length of lines 11 is relatively long, depending on the depth of the sea bed where the wind turbine is located, and the pre-tensioning in the individual anchor lines may be of the order of 1000 kN. The lines' angle to the horizontal plane is approx. 30-70° and the length of the lines 2, 3, depending on the dimensions of the wind turbine installation and of the floating cell as a whole, may be of the order of 50 m.

With these suggested values, calculation shows that the arrangement according to the invention is of the order of 9 times more resistant to rotation than it would have been with a conventional solution in which the anchor lines are fixed directly to the floating cell, without the lines being arranged in a delta shape.

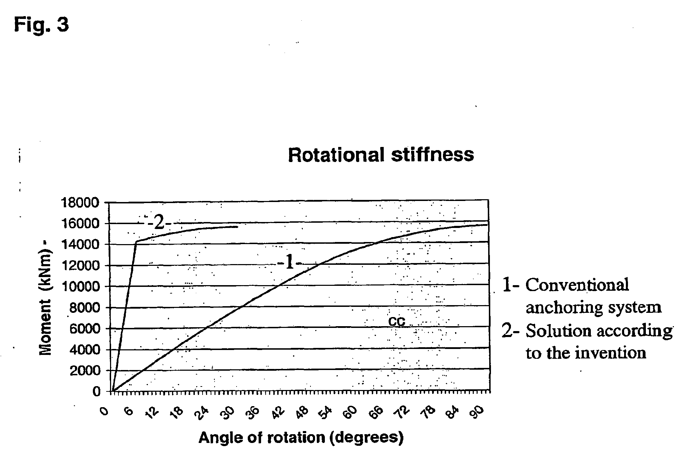

The characteristics of rotational stiffness for a conventional solution and for the delta line solution according to the invention are shown in Fig. 3.

As mentioned, Fig. 3 shows a diagram in which rotation resistance (rotation moment) is calculated on the basis of the rotation angle for a conventional anchor system compared with the present invention. During rotation round the vertical rotation axis, the pre-tensioning load from the anchor line will gradually increase in one split line, while load on the other is correspondingly relieved. When the rotation angle reaches a certain magnitude, the relieved line will become slack. The angle of rotation at which slack occurs will depend on the length of the delta lines, or the distance between the split point and the vertical rotation axis. For small angles, before slack occurs in one line, the arrangement will function as if the fixing point on the buoy has been moved out to the fixing point on the anchor line. This will give a large arm R, such that the righting moment will be:

$$Mr = Fn \times \sin(a) \times R$$

When the angle of rotation reaches a critical value ($\beta$) so that there is slack on one line, the moment increase will be small until the maximum moment is reached. The critical angle for slack in one of the delta lines in the example calculated here, as shown in Fig. 3, is of the order of 6°. The curve here changes direction at a moment upwards of 14000 kNm.

With the increased initial resistance to rotation achieved with this arrangement, active direction control of the turbine can be effected with an acceptable response angle in the tower.

For a conventional anchor system, it can further be seen from the figure that the resistance to rotation increases the slack until a maximum rotation resistance is reached close to an angle of 90°.

The invention as defined in the claims is not limited to the embodiment shown in the figures and described in the foregoing, so that instead of three anchor lines, four or more anchor lines 11 may be used, each with corresponding lines 2, 3 arranged in a delta-shaped pattern. Use of three anchor lines at intervals of 120° is however seen as representing the simplest and cheapest solution.

**Claims**

1. A floating wind turbine installation comprising:

    a cylindrical elongate floating cell (7) of radius (r);
    a tower (8) arranged over the floating cell;
    a generator (9) mounted on the tower, the generator being rotatable in relation to a wind direction;
    a wind rotor (10) fitted to the generator; and
    an anchor line arrangement (6) comprising a plurality of anchor lines (11) fixed at first ends thereof to anchor points, respectively, wherein:

        each of the anchor lines (11) extends from the respective anchor point to a fixing point (5) at a second end of the anchor line, and

each of the anchor lines is connected to the floating cell (7) by at least two further lines (2, 3) that are connected to the respective fixing point at first ends thereof and to the floating cell at second ends thereof, the fixing points being located at a distance (R) greater than the radius (r) from the floating cell such that the two further lines, extending between the respective fixing point and the floating cell, slant outwards so as to form a delta-shaped arrangement.

2. The floating wind turbine installation according to claim 1, where the anchor lines extend from the anchor points at an angle between 30° and 70° to a horizontal plane.

3. The floating wind turbine installation according to claim 1 or 2, wherein the anchor line arrangement (6) comprises three anchor lines (11) arranged symmetrically at intervals of 120°.

4. The floating wind turbine installation according to claim 1, 2 or 3, wherein the lines (2, 3) in each of the delta-shaped arrangements are arranged at a mutual angle of between 20° and 60°.

5. The floating wind turbine installation according to claim 1, 2, 3 or 4, wherein the lines (2, 3) in each of the delta-shaped arrangements, extending between the respective fixing point and the floating cell, are arranged at an angle to the horizontal plane of between 30° and 70°.

6. The floating wind turbine installation according to any of claims 1 to 5, wherein the lines (2, 3) in each of the delta-shaped arrangements are fixed to the floating cell (7) with a maximum possible distance between fixing points thereof around the floating cell.

7. The floating wind turbine installation according to any of claims 1 to 6, wherein the lines (2, 3) in each of the delta-shaped arrangements are fixed in pairs to joint brackets (4) on the floating cell (7).

8. The floating wind turbine installation according to any of claims 1 to 7, wherein the anchor points are anchors or anchor points on a sea bed.

**Patentansprüche**

1. Eine schwimmende Windkraftanlage, umfassend:

     einen zylindrischen länglichen Schwimmkörper (7) mit einem Radius (r);
     einen Mast (8), der über dem Schwimmkörper angeordnet ist;

einen Generator (9), der auf dem Mast montiert ist, wobei der Generator in Bezug auf eine Windrichtung rotierbar ist;
ein Windrotor (10), der an den Generator angepasst ist; und
eine Ankerseilanordnung (6), die mehrere Ankerseile (11) umfasst, welche jeweils mit den ersten Enden davon an Ankerpunkten befestigt sind, wobei:

     jedes der Ankerseile (11) sich vom jeweiligen Ankerpunkt zu einem Befestigungspunkt (5) an einem zweiten Ende des Ankerseils erstreckt, und
     jedes der Ankerseile mit dem Schwimmkörper (7) durch mindestens zwei weitere Seile (2, 3) verbunden ist, welche mit dem jeweiligen Befestigungspunkt mit den ersten Enden davon und mit dem Schwimmkörper mit den zweiten Enden davon verbunden sind, wobei die Befestigungspunkte in einem Abstand (R) angeordnet sind, der größer als der Radius (r) des Schwimmkörpers ist, so dass die zwei weiteren Seile, die sich zwischen dem jeweiligen Befestigungspunkt und dem Schwimmkörper erstrecken, nach außen neigen, so dass eine deltaförmige Anordnung gebildet wird.

2. Die schwimmende Windkraftanlage gemäß Anspruch 1, wobei sich die Ankerseile von den Ankerpunkten in einem Winkel zwischen 30° und 70° zu einer Horizontalebene erstrecken.

3. Die schwimmende Windkraftanlage gemäß Anspruch 1 oder 2, wobei die Ankerseilanordnung (6) drei Ankerseilen (11) umfasst, die symmetrisch in Abständen von 120° angeordnet sind.

4. Die schwimmende Windkraftanlage gemäß Anspruch 1, 2 oder 3, wobei die Seile (2, 3) in jeder der deltaförmigen Anordnungen mit einem gegenseitigen Winkel zwischen 20° und 60° angeordnet sind.

5. Die schwimmende Windkraftanlage gemäß Anspruch 1, 2, 3 oder 4, wobei die Seile (2, 3) in jeder der deltaförmigen Anordnungen, die sich zwischen dem jeweiligen Befestigungspunkt und dem Schwimmkörper erstrecken, in einem Winkel zwischen 30° und 70° zu der Horizontalebene angeordnet sind.

6. Die schwimmende Windkraftanlage gemäß einem der Ansprüche 1 bis 5, wobei die Seile (2, 3) in jeder der deltaförmigen Anordnungen an den Schwimmkörper (7) mit einem größtmöglichen Abstand zwischen deren Befestigungspunkten um den Schwimmkörper befestigt sind.

7. Die schwimmende Windkraftanlage gemäß einem der Ansprüche 1 bis 6, wobei die Seile (2, 3) in jeder der deltaförmigen Anordnungen in Paaren an Gelenklaschen (4) auf dem Schwimmkörper (7) befestigt sind.

8. Die schwimmende Windkraftanlage gemäß einem der Ansprüche 1 bis 7, wobei die Ankerpunkte Anker oder Ankerpunkte auf einem Meeresgrund sind.

**Revendications**

1. Installation de turbine d'éolienne flottante comprenant :

   une cellule flottante allongée cylindrique (7) de rayon (r) ;
   une tour (8) aménagée par-dessus la cellule flottante ;
   un générateur (9) monté sur la tour, le générateur pouvant tourner par rapport à la direction du vent ;
   un rotor d'éolienne (10) ajusté sur le générateur ; et un aménagement à lignes d'ancrage (6) comprenant une pluralité de lignes d'ancrage (11) fixées, à leurs premières extrémités, à des points d'ancrage, respectivement, dans laquelle :

   chacune des lignes d'ancrage (11) s'étend du point d'ancrage respectif à un point de fixation (5) à une seconde extrémité de la ligne d'ancrage, et
   chacune des lignes d'ancrage est raccordée à la cellule flottante (7) par au moins deux autres lignes (2, 3) qui sont raccordées au point de fixation respectif à leurs premières extrémités et à la cellule flottante à leurs secondes extrémités,
   les points de fixation étant situés à une distance (R) supérieure au rayon (r) de la cellule flottante de sorte que les deux autres lignes, qui s'étendent entre le point de fixation respectif et la cellule flottante, s'inclinent vers l'extérieur de façon à former un aménagement en forme de delta.

2. Installation de turbine d'éolienne flottante selon la revendication 1, dans laquelle les lignes d'ancrage s'étendent des points d'ancrage sous un angle compris entre 30° et 70° avec un plan horizontal.

3. Installation de turbine d'éolienne flottante selon la revendication 1 ou la revendication 2, dans laquelle l'aménagement à lignes d'ancrage (6) comprend trois lignes d'ancrage (11) aménagées de manière symétrique à intervalles de 120°.

4. Installation de turbine d'éolienne flottante selon la revendication 1, 2 ou 3, dans laquelle les lignes (2, 3) de chacun des aménagements en forme de delta sont aménagées sous un angle mutuel compris entre 20° et 60°.

5. Installation de turbine d'éolienne flottante selon la revendication 1, 2, 3 ou 4, dans laquelle les lignes (2, 3) de chacun des aménagements en forme de delta, s'étendant entre le point de fixation respectif et la cellule flottante, sont aménagées sous un angle avec le plan horizontal compris entre 30° et 70°.

6. Installation de turbine d'éolienne flottante selon l'une quelconque des revendications 1 à 5, dans lequel les lignes (2, 3) de chacun des aménagements en forme de delta sont fixées à la cellule flottante (7) avec une distance la plus grande possible entre leur point de fixation autour de la cellule flottante.

7. Installation de turbine d'éolienne flottante selon l'une quelconque des revendications 1 à 6, dans laquelle les lignes (2, 3) de chacun des aménagements en forme de delta sont fixées par paires à des potences de jonction (4) sur la cellule flottante (7).

8. Installation de turbine d'éolienne flottante selon l'une quelconque des revendications 1 à 7, dans laquelle les points d'ancrage sont des ancres ou des points d'ancrage sur un lit sous-marin.

**Fig. 1**

**Fig. 2**

## Fig. 3

### Rotational stiffness

1- Conventional anchoring system
2- Solution according to the invention

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3082608 A
- US 5476059 A

- WO 2004104411 A